# EUROPÄISCHE PATENTANMELDUNG

(11) **EP 1 176 123 A1**
(43) Veröffentlichungstag der Anmeldung: **30.01.2002**
(21) Anmeldenummer: 01118087.4
(22) Anmeldetag: 26.07.2001
(51) Int. Cl.: C02F 3/12, B01F 3/04, C02F 7/00

(54) **Vorrichtung zur Sauerstoffanreicherung von Oberflächen-Gewässern**

(30) Priorität: 28.07.2000 DE 10036884
(71) Anmelder: MESSER GRIESHEIM GMBH, 60547 Frankfurt (DE)
(72) Erfinder: Hertrampf, Joachim, 49497 Mettingen (DE)

(57) **Zusammenfassung**

Die Erfindung betrifft eine Vorrichtung zur Sauerstoffanreicherung von Oberflächen-Gewässern oder von Abwasser in biologischen Kläranlagen, mit einem unterhalb der Wasseroberfläche in einem Trägergestell angeordneten, als Injektor ausgebildeten Eintragungsaggregat .
Erfindungsgemäß wird dadurch, dass das Eintragungsaggregat (1) in zwei Trägergestelle (2,3) mittels einer Kupplung (4) trennbar angeordnet ist, der Wartungs- und Reparaturaufwand einer derartigen Vorrichtung wesentlich gesenkt.

## Beschreibung

Die Erfindung betrifft eine Vorrichtung zur Sauerstoffanreicherung von Oberflächen-Gewässern oder von Abwasser in biologischen Kläranlagen nach dem Oberbegriff des Anspruches 1.

Durch die Belastung von Flüssen, Seen, Talsperren und anderen Oberflächen-Gewässern mit Verunreinigungen (Ammonium, Phosphat, organische Stoffe usw.) sowie bei der Gewässerregulierung, der Einleitung von Kühlwasser kommt es direkt oder indirekt zu Sauerstoffmangelsituationen im Wasser mit den entsprechenden negativen Folgeerscheinungen (Fischsterben, Absterben des Ökosystems im Wasser, Geruchsemission usw.). Desgleichen wird in biologischen Kläranlagen zunehmend eine höhere Sauerstoffverfügbarkeit gefordert, da die behördlichen Anforderungen hinsichtlich Nitrifikation und Denitrifikation sowie die Herabsetzung der Ablaufgrenzwerte (BSB₅, CSB usw.) ständig steigen. Durch die höhere Sauerstoffverfügbarkeit lässt sich die Reinigungsleistung von biologischen Kläranlagen steigern.

Vorrichtungen zur Sauerstoffanreicherung von Gewässern sind beispielsweise aus DE-PS 93 04 24 und DGBM 93 04 24 mit einem unter der Wasseroberfläche in einem Trägergestell angeordneten Eintragungsaggregat bekannt.

Diese bekannten Vorrichtungen zur Sauerstoffanreicherung von Oberflächen-Gewässern weisen den wesentlichen Nachteil auf, dass das in einem Trägergestell angeordnete, bis zu 2000 kg schwere Eintragungsaggregat zu Reparaturzwecken aus dem Wasser gehoben bzw. zeit- und kostenaufwendig unter Wasser gewartet werden muß.

Der Erfindung liegt daher die Aufgabe zugrunde, eine Vorrichtung zur Sauerstoffan-reicherung von Oberflächen-Gewässern oder von Abwasser in biologischen Kläran-lagen mit einem unter der Wasseroberfläche in einem Trägergestell angeordneten, zeit- und kostengünstig zu wartenden bzw. reparierenden Eintragungsaggregat zur Verfügung zu stellen.

Diese Aufgabe wird bei einer gattungsgemäßen Vorrichtung durch die kennzeichnenden Merkmale des Anspruches 1 gelöst.

Vorteilhafte Weiterbildungen der Erfindung sind in den Ansprüchen 2 bis 5 aufgezeigt.

Die mit der Erfindung erzielbaren Vorteile bestehen insbesondere darin, dass durch das in zwei Trägergestellen mittels einer Kupplung trennbar angeordnete, als ein herkömmlicher Injektor mit mindestens einer Pumpe, einem Venturirohr und einer aus Mischdüsen und Mischrohren bestehenden Mischstrecke ausgebildeten Eintragungsaggregat eine zeit- und kostengünstige Reparatur und Wartung gewährleistet wird.

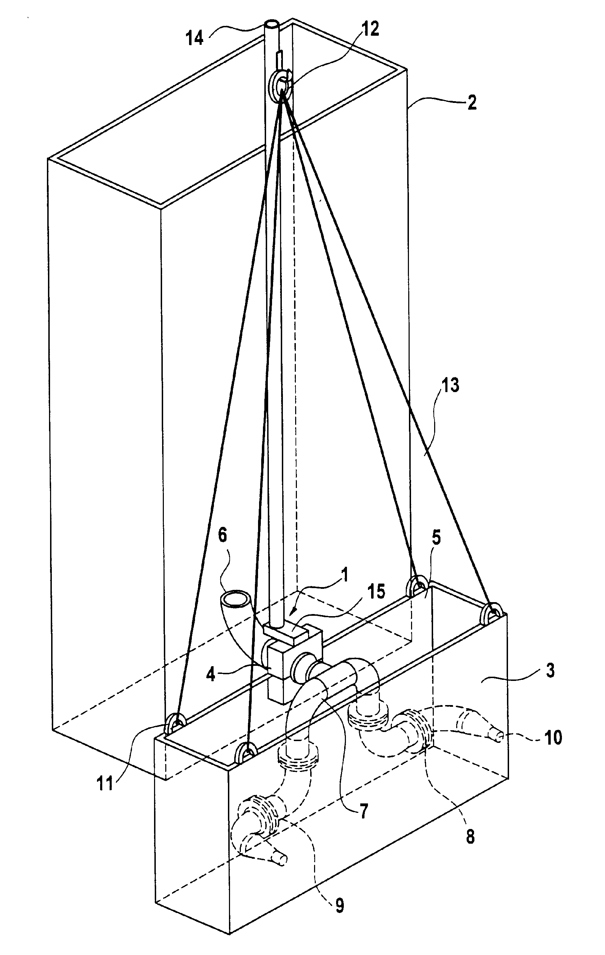

Nachfolgend wird die Erfindung anhand eines in der Zeichnung dargestellten, bevorzugten Ausführungsbeispiel näher erläutert.

Die einzige Figur zeigt eine erfindungsgemäße Vorrichtung zur Sauerstoffan-reicherung von Oberflächen-Gewässern oder von Abwasser in biologischen Kläran-lagen mit einem bildlich nur teilweise dargestellten, als Injektor mit mindestens einer Pumpe, einem Venturirohr und einer aus Mischdüsen und Mischrohren bestehenden Mischstrecke ausgebildeten Eintragungsaggregat 1, welches in zwei Trägerge-stellen 2, 3 durch eine Kupplung 4 trennbar angeordnet ist. Das Eintragungsaggregat 1 ist mittels der, im oberen Kantenbereich einer Seitenwand 5 des Trägergestelles 3 angeordneten Kupplung 4 im Bereich seines Zulaufrohres 6 in ein im Trägergestell 2 und in ein im Trägergestell 3 angeordnetes Aggregatteil trennbar angeordnet. Das im Trägergestell 3 angeordnete Aggregatteil weist ein an das das Wasser-Sauerstoff-Gemisch zuführende Zulaufrohr 6 sich anschließendes, vorzugsweise als Venturirohr ausgebildetes Auslaufrohr 7 auf, dessen beide Seitenrohre jeweils ein horizontales und ein vertikales Drehgelenk 8, 9 und jeweils eine endseitige Düse 10 aufweisen. Das Trägergestell 3 ist mit in den oberen Eckpunkten angeordneten Gestellösen 11 versehen, wobei in jeder Gestellöse 11 ein Stahlseil 13 befestigt ist, welche mit ihren entgegengesetzten Enden in einer Kranöse 12 befestigt sind. Zum Positionieren des in den Gestellen 2, 3 im Wasser eingebrachten Eintragungsaggregates 1 ist ein Führungsrohr 14 auf einer auf der Oberfläche der Kupplung 4 angeordneten Halterung 15 zweckentsprechend angeordnet.

Die das Eintragsaggregat 1 aufnehmenden Trägergestelle 2, 3 bestehen aus Stahlprofilen, die im wesentlichen zur Fixierung der Baugruppen wie Siebbandanlage, Druckerhöhungspumpe, Injektor, Rohrleitungen und Austrittsdüsen dienen.

Zur Sauerstoffanreicherung von Oberflächen-Gewässern oder von Abwasser in biologischen Kläranlagen wird das in den Trägergestellen 2, 3 angeordnete und als ein herkömmlicher Injektor ausgebildete Eintragungsaggregat 1 mittels des in vorbeschriebener Weise auf der Kupplung 4 befestigten Führungsrohrs 14 unter die Wasseroberfläche in Arbeitsposition gebracht. Im Eintragungsaggregat 1 wird auf übliche Weise Wasser mit Sauerstoff zu einem Wasser-Sauerstoff-Gemisch vermischt und unter einem Druck über den rohrförmigen Zulauf 6 in das mittels Drehgelenken 8, 9 beidseitig horizontal und vertikal drehbare Auslaufrohr 7 durch beide endseitigen Düsen 10 in das mit Sauerstoff zu versorgende Wasser eingebracht. Zu Wartungs- und Reparatur- oder sonstigen Zwecken kann das im Trägergestell 3 angeordnete, mittels der Kupplung 4 im Bereich des waagerechten Teil seines Zulaufes 6 von dem im Trägergestell 3 angeordneten Aggregatteil abgetrennte Aggregatteil, durch ein mit seinem Hebeorgan in die Kranöse 12 eingreifendes Hebegerät, wie beispielsweise ein Kran, leicht und problemlos aus dem Wasser gehoben werden.

### Bezugszeichen-Aufstellung

- 1: Eintragungsaggregat (Injektor)
- 2: Trägergestell
- 3: Trägergestell
- 4: Kupplung
- 5: Seitenwand
- 6: Zulaufrohr (Wasser/Sauerstoff-Gemisch)
- 7: Auslaufrohr (Wasser/Sauerstoff-Gemisch)
- 8: Drehgelenk (horizontal)
- 9: Drehgelenk (vertikal)
- 10: Düse
- 11: Gestellöse
- 12: Kranöse
- 13: Stahlseile
- 14: Führungsrohr
- 15: Halterung

## Patentansprüche

1. Vorrichtung zur Sauerstoffanreicherung von Oberflächen-Gewässern oder von Abwasser in biologischen Kläranlagen, mit einem unterhalb der Wasseroberfläche in einem Trägergestell angeordneten Eintragungsaggregat,
**dadurch gekennzeichnet,**
**dass** das Eintragungsaggregat (1) in zwei Trägergestelle (2, 3) mittels einer Kupplung (4) trennbar angeordnet ist.

2. Vorrichtung nach Anspruch 1,
**dadurch gekennzeichnet,**
**dass** das Eintragungsaggregat (1) durch die im oberen Kantenbereich einer Seitenwand (5) des Trägergestells (3) angeordnete Kupplung (4) im Bereich seines Zulaufes (6) in zwei Aggregatteile in den Trägergestellen (2, 3) trennbar angeordnet ist.

3. Vorrichtung nach Anspruch 1 oder 2,
**dadurch gekennzeichnet,**
**dass** das durch die Kupplung (4) im Bereich seines Zulaufes (6) trennbare, im Trägergestell (3) angeordnete Teil des Eintragungsaggregates (1) ein doppelseitiges Auslaufrohr (7) mit einem in jedem Auslaufrohr angeordneten horizontalen und vertikalen Drehgelenk (8, 9) sowie mit einer an jedem Auslaufrohrende angeordneten Düse (10) aufweist.

4. Vorrichtung nach einem der Ansprüche 1 bis 3,
**dadurch gekennzeichnet,**
**dass** das Trägergestell (3) an seinen oberen Eckpunkten Gestellösen (11) aufweist.

5. Vorrichtung nach einem der Ansprüche 1 bis 4,
**dadurch gekennzeichnet,**
**dass** zum Positionieren des in den Trägergestellen (2, 3) angeordneten Eintragungsaggregates (1) im Wasser ein Führungsrohr (14) auf einer auf der Oberfläche der Kupplung (4) angeordneten Halterung (15) angeordnet ist.
